(19)

Europäisches
Patentamt
European
Patent Office
Office européen
des brevets

(11)  **EP 3 719 171 A1**

(12)  **EUROPEAN PATENT APPLICATION**

(43) Date of publication:
**07.10.2020  Bulletin 2020/41**

(51) Int Cl.:
**C25B 1/00** (2006.01)          **C25B 1/04** (2006.01)
**C25B 15/02** (2006.01)

(21) Application number: **19167612.1**

(22) Date of filing: **05.04.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **DynElectro ApS
4621 Gadstrup (DK)**

(72) Inventors:
• **JENSEN, Soren Hojgaard
4621 Gadstrup (DK)**
• **GRAVES, Christopher Ronald
California 94306 (US)**
• **MOGENSEN, Mogens Bjerg
3540 Lynge (DK)**

(74) Representative: **Grünecker Patent- und
Rechtsanwälte
PartG mbB
Leopoldstraße 4
80802 München (DE)**

(54)  **ELECTROLYSIS SYSTEM WITH CONTROLLED THERMAL PROFILE**

(57)    This invention relates to a system comprising one or more electrolysis cell(s) and at least one power electronic unit that supplies the cell(s) with a fluctuating voltage, and to a method for operating one or more electrolysis cell(s), comprising providing one or more voltage fluctuations to the electrolysis cell(s) by at least one power electronic unit, enabling the provision of a low-cost electrolysis system which simultaneously allows for fast-response dynamic operation, improved electrolysis efficiency, increased lifetime and high impurity tolerance.

**FIG. 6**

**Description**

**FIELD OF INVENTION**

This invention relates to a system comprising one or more electrolysis cell(s) and at least one power electronic unit that supplies the cell(s) with a fluctuating voltage, and to a method for operating one or more electrolysis cell(s), comprising one or more voltage fluctuations to the electrolysis cell(s) by at least one power electronic unit, enabling improved thermal management during operation of the electrolysis cell(s).

The invention enables improved control of the temperature distribution in electrolysis cells and stacks by controlling the size and shape of a voltage fluctuation. The invention enables isothermal operation under dynamic load conditions, increases the cell(s) lifetime by reducing thermo-mechanical stress and by desorbing impurities adsorbed at the active sites in the electrodes. Specifically, for $CO_2$ electrolysis the invention increases the maximum obtainable carbon monoxide outlet gas concentration.

**BACKGROUND OF THE INVENTION**

In commercial electrolysis systems, cells are typically stacked with interconnects between the cells. A single repeating unit (SRU) of the stack consists of a cell and an interconnect. Due to their intrinsic capability of converting electrical energy into chemical energy, electrolysis systems are considered as a key technology for a renewable energy economy.

For example, high temperature electrolysis cells (such as, e.g., Solid Oxide Electrolysis Cells (SOECs)) can be used to convert $CO_2$ and $H_2O$ to CO, $H_2$ and $O_2$. SOECs typically operate at 600 to 900 °C. The electrolysis reaction is endothermic and thus requires heat to be supplied to the cells, which may be accomplished by pre-heating the inlet gas (the $CO_2$ and/or $H_2O$). Alternatively, the electrolysis stack can be operated at thermo-neutral potential, which represents the SRU voltage where the Joule heat (i.e. heat generated by current running through the internal resistance in the SRU) matches the heat required by the electrolysis reaction, so that energy input from or output to outside may be minimized and electrolysis efficiency may be improved.

For $H_2O$ steam electrolysis, the thermo-neutral potential ($E_{tn}$) is approximately 1.3 V, and for $CO_2$ electrolysis it is approximately 1.5 V. In high temperature electrolysis cells, $E_{tn}$ is substantially higher than the open circuit voltage (OCV), i.e. the voltage across the terminals of an electrolysis cell and in the absence of external current flow. For typical SOEC operating temperatures and gas compositions at ambient pressure, the OCV is slightly below 1 V. In such electrolysis systems, operation of an SRU at $E_{tn}$ typically causes excessive degradation due to the high electrode overvoltage(s) in the SRU and/or adsorption of impurities at the electrochemically active sites in the electrode. Increasing the SRU voltage above $E_{tn}$ (and thus further increasing the electrolysis current density) will accelerate the degradation, lower the conversion efficiency and increase the need for thermal control to dissipate the excessive Joule heat.

When the SRU voltage and current is changed, the temperature distribution in the stack gradually change due to variation of reaction and Joule heat production. This introduces thermo-mechanical stress, which may lead to loss of contact at the interfaces between the various layers in the stack (typically between stack and bipolar interconnect plates). Therefore, dynamic operation which involves repeated change of the SRU voltage and current can decrease the lifetime. On the other hand, C. Graves et al., Nature Materials 2015, 14, 239-244, discloses that the voltage rapidly increases above 1.3 V in constant-current electrolysis operation at -1 A·cm$^{-2}$, while reversing the current periodically (-1/+0.5 A·cm$^{-2}$) leads to lower degradation, more stable cell voltage and extended lifetime of the cells. However, that beneficial effect was observed in a test of a single cell mounted in an externally-heated near-isothermal enclosure. Dynamic testing of larger stacks result in much larger temperature fluctuations which can induce high degradation rates due to the thermal stresses, overshadowing that beneficial effect ("Solid oxide electrolysis for grid balancing", Final Report for Energinet.dk, project no. 2013-1-12013, Fig. 27. Pp. 35).

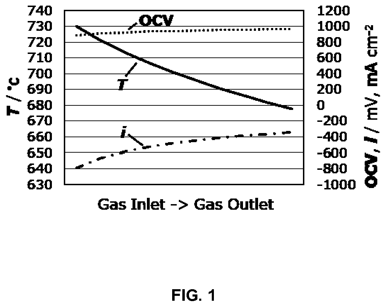

If a high-temperature electrolysis cell stack is operated with an SRU voltage between OCV and $E_{tn}$, the gas inside the stack will cool down from inlet towards outlet. An example of this is shown in FIG. 1 and concerns $CO_2$ electrolysis in a stack with an SRU voltage of 1.228 Volt (a typical SOEC SRU voltage). The temperature from gas inlet to gas outlet significantly drops although an excessive amount of oxygen sweeps the positive electrode to limit the temperature decrease inside the stack. With decreasing temperature, the internal resistance increases, which in turn decreases the absolute current density at stack outlet and causes an uneven current distribution in the stack.

For high temperature $CO_2$ electrolysis the decreased outlet temperature decreases the threshold for the onset of carbon deposition. This decreases the maximum carbon monoxide content in the outlet gas that can be obtained without risking detrimental carbon formation in the electrodes, which translates into increased expenses for gas separation. Operating at an SRU voltage of $E_{tn}$ for $CO_2$ electrolysis would remove the temperature drop from inlet to outlet. Unfortunately, operation at $E_{tn}$ with state-of-the-art cells typically results in high degradation rates.

A local temperature decrease in the stack also causes tensile stress at the interconnect/cell interface, which may potentially lead to delamination and loss of contact which again increases the internal resistance in the cell. The decreased uniformity in the current density and conversion of the reactant gas further accelerates degradation. For smaller stacks, the thermo-mechanical stress can be limited by using a sweep-gas (e.g. over-blow of air). However, this adds complexity and cost to the system, in particular if the system is operated at elevated pressure.

Dynamic operation of electrolysis cells is generally of particular interest, as this provides load-following capabilities, i.e. services that can be sold to electricity grid operators. Besides this, an increased lifetime and improved impurity tolerance which may decrease operational costs are desirable.

Different methods have been proposed in prior art to provide load-following capabilities to SOEC systems.

One method involves operation at a constant current with a SRU voltage between OCV and $E_{tn}$. When the SRU voltage is below $E_{tn}$, the stack cools until the internal resistance in the SRU is high enough to raise the SRU voltage to $E_{tn}$. In this way, the stack will be operated at a lower power (due to the lower current) compared to the previous set-point where the current was higher. When a higher power is required, the current is increased. This will increase the SRU voltage above $E_{tn}$, which again increases the stack temperature until the internal resistance is low enough to ensure operation at $E_{tn}$. However, this method is disadvantageous since the thermal profile in the stack changes when the SRU voltage is changed, which causes thermo-mechanical stress inside the SRU and compromises the weak IC/cell interfaces. Furthermore, the response time is several minutes to hours before stable operation at the new set-point is achieved.

A further known method is to operate a multi-stack system in cascade-mode, wherein the stacks are operated either at OCV or thermo-neutral potential. The number of stacks operated at thermo-neutral voltage divided with the total number of stacks defines the load ratio. This operating strategy requires individual power and gas supplies to several stacks which remarkably increases system complexity and costs.

US 2009/0325014 A1 discloses a method, wherein the concentration of reactant gases fed into the cell is altered in response to fluctuations of the current supplied to the cell, thereby altering the current required to reach thermo-neutral potential.

Finally, US 2016/0040310 A1 describes a hydrogen production system that includes a capacitor inputting electric power energy from a renewable power supply, and storing electric power, a pulse voltage generation unit generating a pulse voltage having a set amplitude and a set cyclic period by using the electric power stored in the capacitor, and an electrolytic cell applying the generated pulse voltage, and generating hydrogen by high temperature steam electrolysis by using steam supplied into the electrolytic cell.

However, the proposed methods do not satisfactorily solve the problem of providing a low-cost electrolysis system which simultaneously enables fast-response dynamic operation, improved electrolysis efficiency, increased lifetime and high impurity tolerance.

In view of the above, there still exists a need to provide an electrolysis system and a method of its operation which addresses the above-identified problems.

## SUMMARY OF THE INVENTION

The present invention solves these objects with the subject matter of the claims as defined herein. Further advantages of the present invention will be further explained in detail in the section below.

In general, the present invention relates to a system for operating one or more electrolysis cell(s), comprising: one or more electrolysis cell(s) and at least one power electronic unit, wherein the power electronic unit(s) provide(s) one or more voltage fluctuations to the electrolysis cell(s), wherein the voltage fluctuation(s) are configured such that near-thermoneutral operation at part load is enabled by matching the integral Joule heat production with the integral reaction heat consumption inside said cell(s).

In a further embodiment, the present invention provides a method for operating one or more electrolysis cell(s), comprising: providing one or more voltage fluctuations to the electrolysis cell(s) by at least one power electronic unit, wherein the voltage fluctuation(s) are configured such that near-thermoneutral operation at part load is enabled by matching the integral Joule heat production with the integral reaction heat consumption inside said cell(s).

The present invention enables dynamic operation of electrolysis systems, increased lifetime, impurity tolerance, and carbon activity in the outlet gas.

Preferred embodiments of the system for operating one or more electrolysis cell(s) and the related method, as well as other aspects of the present invention are described in the following description and the claims.

## BRIEF DESCRIPTION OF THE DRAWINGS

FIG. 1 shows the simulated OCV, temperature and current density, for conventional $CO_2$ electrolysis operating profile with 5x oxygen overblow (i.e. with a cell footprint of 100 cm$^2$, 5% CO at gas inlet and 28% CO at gas outlet,

$CO_2$ as buffer gas, a SRU voltage of 1.228 V, and a total current of 50 A).

FIG. 2A schematically illustrates an electrolysis cell.

FIG. 2B illustrates an electrolysis system comprising two cells stacked in series.

FIG. 3A and 3B show examples of a steam electrolysis using voltages with sine wave-shaped fluctuations. Corresponding average voltages are shown as horizontal lines.

FIG. 4 shows an example of a steam electrolysis using fluctuating voltage operation at $E_{tn}$ 80% of the time and at OCV 20% of the time (thick line). The average voltage is shown as the thin line. $E_{tn}$ and OCV are shown with dotted lines.

FIG. 5 shows an example of a $CO_2$ electrolysis using square wave-shaped fluctuating voltage (thick line) with average cell voltages of 1.18 V and 1.32 V (thin line), respectively. $E_{tn}$ and OCV are shown with dotted lines.

FIG. 6 is a diagram showing OCV, temperature and current density for the square wave-shaped fluctuating voltage with average cell voltages of 1.114 V. The temperature profile is shown for 5x oxygen overblow (a cell footprint of 100 $cm^2$, 5% CO at gas inlet and 28% CO at gas outlet, $CO_2$ as buffer gas, a cell voltage of 1.3 V for 74% of the time and 0.7 V for 26% of the time, and the total current being 53 A).

FIG. 7 a diagram showing the OCV, temperature and current density under the conditions of FIG. 6, except for the omission of oxygen overblow.

## DETAILED DESCRIPTION OF THE INVENTION

For a more complete understanding of the present invention, reference is now made to the following description of the illustrative embodiments thereof:

In a first embodiment, the present invention relates to a system for operating one or more electrolysis cell(s), comprising: one or more electrolysis cell(s); and at least one power electronic unit, wherein the power electronic unit(s) provide(s) one or more voltage fluctuations to the electrolysis cell(s), wherein the voltage fluctuation(s) are configured such that near-thermoneutral operation at part load is enabled by matching the integral Joule heat production with the integral reaction heat consumption inside said cell(s).

In practice, actual electrolysis systems typically operate at conditions that are neither fully isothermal nor fully adiabatic. The term "near-thermoneutral operation", as used herein, denotes electrolysis operation where the absolute value of the difference between the integrated Joule heat production and the integrated reaction heat consumption (both integrated over a period of more than 3600 seconds) is less than the absolute value of the integrated heat consumption or the absolute value of the integrated heat production, or both.

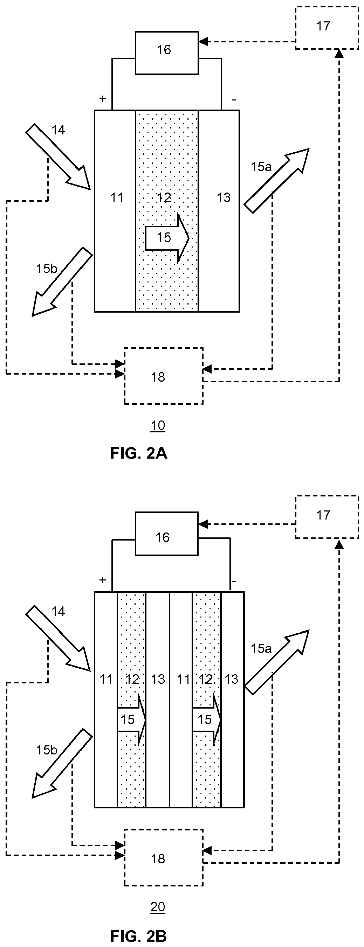

A schematic representation of an exemplary electrolysis cell constructed for electrolyzing different types of reactant materials into desired reaction products is shown in FIG. 2a. The cell 10 comprises a first electrode 11 and a second electrode 13, as well as an electrolyte 12 provided between the first electrode 11 and the second electrode 13. During electrolysis operation, electrical power is supplied to the cell 10 (i.e. across the first electrode 11 and the second electrode 13) through a power electronic unit 16 and a reactant 14 passed over the first electrode 11 is separated into ions 15 of a second reaction product 15a and a mixture 15b of a first reaction product and unreacted reactant. The ions 15 pass though the electrolyte 12 and the second reaction product 15a is formed at the second electrode 13. According to the present invention, the power electronic unit 16 provides one or more voltage fluctuations to the electrolysis cell(s). In a preferred embodiment, the system according to the present invention further comprises at least one proportional-integral-derivative (PID) system 17 controlling the voltage fluctuation(s) based on measurements of the inlet and outlet temperature of the fluid (gas or liquid) sent to and from the electrolysis cell(s) or the stack or by measurements of the temperature directly in the cell compartments (not shown), wherein each of the temperature measurements may be conducted by a temperature detection means 18. The PID controller is configured to continuously calculate an error value as the difference between a desired temperature setpoint and the measured temperatures, enabling the connected power electronic unit to apply a correction of the voltage fluctuations based on proportional, integral, and derivative terms.

The reactant materials are not particularly limited. In preferred embodiments, the one or more electrolysis cell(s) perform electrolysis of $H_2O$, $CO_2$, or co-electrolysis of $H_2O$ and $CO_2$.

If the cell 10 is a solid oxide electrolysis cell (SOEC) designed to electrolyze water, the first electrode 11 represents the hydrogen electrode, the second electrode 13 may be referred to as the oxygen electrode, and the reactant 14 will be high temperature steam. A catalyst in the hydrogen electrode facilitates separation of steam 14 into oxygen ions 15 and a mixture of hydrogen gas and unreacted steam 15b. As the oxygen ions 15 pass though the electrolyte 10, oxygen gas 15a will be formed at a catalyst in the oxygen electrode 13. However, it is understood that FIG. 2a serves to schematically illustrate an exemplary electrolysis system, and the present invention is not limited to such a configuration (or a SOEC) and may include further layers (e.g. membranes or diaphragms) and components as long as the electrolysis cell enables electrolytic operation. In embodiments, the electrolytic cell may be constructed from fuel cells which operate in electrolytic mode (reversible fuel cells). Furthermore, the electrolysis cell is not limited to a flat stack configuration but may also incorporate other designs (including cylindrical configurations, for example). FIG. 2b illustrates an electrolysis stack *20* that is constructed from two electrolysis cells *10*. Depending on electrolysis production requirements, additional cells could also be added to the stack *20*.

Unless otherwise noted, the term "electrolysis cell(s)", as used herein, will be understood to encompass both a single cell, such as the cell *10* shown in FIG. 2a, and a stack of two or more cells, such as the stack *20* shown in FIG. 2b.

It is noted that details pertaining to materials and construction techniques for electrolysis cells are well-known to the skilled artisan and will not be described herein.

In general, a distinction may be made between low-temperature and high-temperature electrolysis. In high-temperature electrolysis, the one or more electrolysis cell(s) are configured to operate above 120°C, such as 200°C to 1100°C, or 650°C to 1000°C, for example. While not being limited thereto, the one or more electrolysis cell(s) for high-temperature electrolysis are preferably selected from solid oxide electrolysis/fuel cells (SOEC/SOFC), molten carbonate electrolysis/fuel cells (MCEC/MCFC), high temperature and pressure alkaline electrolysis/fuel cells, and ceramic electrolyte proton conducting electrolysis/fuel cells (PCEC/PCFC).

In electrolytic mode, the electrolysis reaction is generally endothermic, i.e. the reaction heat is negative. The Joule heat due to the necessary overpotential and current is positive in both fuel cell and electrolysis mode. In high-temperature electrolysis, near-thermoneutral operation at an operating voltage below $E_{tn}$ is desirable for optimal performance. For operating voltages between OCV and $E_{tn}$, near-thermoneutral operation requires heat addition during the electrolysis process. In such a system, heat addition is further necessary to reduce tensile stress at the interconnect/cell interface, which potentially leads to delamination and loss of contact, poor performance and degradation. Conventionally, heat is supplied through the use of a heated sweep gas or active heating devices, for example. In contrast, in the present invention, the Joule heat is balanced with the reaction heat (plus heat loss to surroundings) by supplying the electrolysis cell(s) with one or more voltage fluctuations via one or more power electronic unit(s). Thus, the electrolysis system can be operated near-thermoneutrally with no need for external heating sources.

By adjusting the voltage variation the Joule heat can be set to balance or slightly exceed the reaction heat. This enables near-thermoneutral operation, or slightly exothermal operation with an average (integral) SRU voltage between OCV and $E_{tn}$ while having the temperature of the outlet gas to be the same or slightly higher than the temperature of the inlet gas. Therefore the operation with the voltage variation enables improved control of the thermal profile in the SRU. Optimizing the average (integral) SRU voltage and the thermal profile can be used to increase the carbon activity in a carbonaceous gas inside the electrolysis stack without risking detrimental carbon formation in the electrodes. For $CO_2$ electrolysis this translates into higher outlet gas CO concentration which again translates into decreased expenses for gas separation.

From the viewpoint of reducing mechanical tension, the duration of each voltage fluctuation(s) is preferably set to a range of from 1 μs to 100 s. By operating the electrolysis system accordingly, the duration of each fluctuation is so short that the temperature change in the fluid (e.g. gas) and the cells and stack is negligible. In this way, accumulation of mechanical tension at the weak interfaces in the stack can be avoided, making it possible to achieve the increased lifetimes enabled by reversible operation. In further preferred embodiments, the frequency of the voltage fluctuation(s) is in the range of from 10 mHz to 100 kHz.

In preferred embodiments, the range of the voltage fluctuation(s) is between 0.2 V and 2.0 V, especially preferably between 0.5 V and 1.9 V.

In a preferred embodiment of the present invention, the power electronic unit comprises a DC power supply with a pulse width modulation (PWM) motor controller, a bi-directional power supply, or a power supply combined with an electronic load (e-load).

In a preferred embodiment, the voltage fluctuation(s) is/are configured to effect desorption or dissolution of side reaction compounds adsorbed, precipitated or otherwise formed in the electrodes of the cell(s), which leads to degradation decrease, more stable cell voltage and extended lifetime of the cells. While not being limited thereto as long as their formation is reversible, such side reaction compounds may originate from impurities in the reactant (e.g., hydroxides formed by alkaline earth metals, hydrocarbons, sulphur-based compounds, formaldehyde, formic acid ammonia, halogenated compounds) or from electrolysis cell materials (e.g., Si-based impurities from glass components). Desorption or dissolution of side reaction compounds may be achieved by periodical changes to the cell voltage so that the electrochemical cell switches between electrolysis and fuel cell mode operation, for example.

The shape of the voltage fluctuation can be in principle of any type. However, voltage fluctuations comprising sine-wave shaped and/or square-wave shaped voltage fluctuation profiles are preferable. A mix between the sine-shaped and the square-shaped voltage fluctuations is especially preferred to minimize the peak voltage and to minimize erroneous operation conditions related to induction phenomena. Calculations of near-thermoneutral operation conditions using sine-wave shaped and/or square-wave shaped voltage fluctuation profiles will be described by means of examples below.

In a second embodiment, the present invention relates to a method for operating one or more electrolysis cell(s), comprising: providing one or more voltage fluctuations to the electrolysis cell(s) by at least one power electronic unit, wherein the voltage fluctuation(s) are configured such that near-thermoneutral operation at part load is enabled by matching the integral Joule heat production with the integral reaction heat consumption inside said cell(s).

In a preferred embodiment, the current in the cell(s) is reversed for a fraction of the time of the voltage fluctuation, so that the cell(s) operate in fuel cell mode. Advantageously, this process may reduce damages to the electrode microstructure and/or effect desorption or dissolution of side reaction compounds adsorbed, precipitated or otherwise formed in the electrodes of the cell(s). Furthermore, during the fraction of time where the current is reversed, not all the products from the integral electrochemical reaction which still reside inside the cell(s) are converted back to reactants. Therefore there is no need to change the fluid (e.g. gas) composition, as opposed to conventional (DC voltage) operation.

It will be understood that the preferred features of the first embodiment may be freely combined with the second embodiment in any combination, except for combinations where at least some of the features are mutually exclusive.

**EXAMPLES**

Example 1: Sine-wave shaped voltage fluctuations

In general, the voltage fluctuation provided to the electrolytic cell(s) can be regarded as a DC voltage superimposed by a smaller AC voltage (AC/DC voltage).

A DC voltage $U_1$ superimposed with an AC sine voltage can be written as

$$U(t) = U_0 \sin(\omega t) + U_1 \qquad \text{(Eq. 1)}$$

The reaction heat can be written as

$$\dot{\varsigma}_r \quad {}^{U} \quad \frac{E}{R} \cdot K \qquad \text{(Eq. 2)}$$

Herein, U represents the cell voltage, E is the Nernst voltage, R the cell resistance, and $K$ is the Coulomb specific reaction heat $( K = \dfrac{T\Delta S}{nF} )$. For electrolysis, the reaction heat is negative.

The Joule heat can be written as:

$$\dot{\varsigma}_J \quad \left( {}^{U} \frac{E}{R} \right)^2 \qquad \text{(Eq. 3)}$$

For thermo-neutral operation, it is required that:

$$\Downarrow \quad \int_0^T (\dot{\xi}_r \cdot \dot{z}_J) \cdots$$

$$\Updownarrow \quad \int_0^T \left( \frac{\text{sin}(\omega t)+U_1-E)}{R} \right) \cdot K + \frac{(U_0\text{sin}(\omega t)+U_1-E)^2}{R} \, dt = 0$$

$$\Updownarrow \quad \int_0^T \text{sin}(\omega t)+U_1-E)\cdot K + U_0^2 \text{sin}^2(\omega t)+(U_1-E)^2+2(U_1-E)U_0\text{sin}(\omega t) \, dt = 0$$

$$\Updownarrow \quad \left[ \frac{U_0 K}{\omega}\text{cos}(\omega t)+(U_1-E)Kt+U_0^2\left(\frac{t}{2}-\frac{1}{4}\text{sin}(2\omega t)\right)+(U_1-E)^2 t - 2\frac{(U_1-E)}{\omega}\text{cos}(\omega t) \right]_0^T = 0$$

$$\Updownarrow \quad -E)KT + \frac{U_0^2}{2}T + (U_1-E)^2 T = 0$$

$$\Updownarrow \quad E) = \frac{-K \pm \sqrt{K^2 - 2U_0^2}}{2}$$

<div align="right">(Eq. 4)</div>

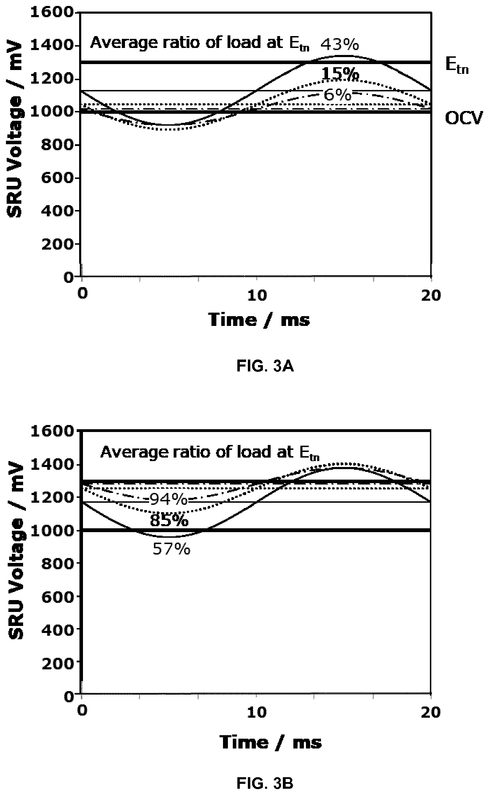

Figures 3A and 3B illustrate exemplary sine-shaped fluctuations operated at 50 Hz. The graphs in Figure 3A refer to the + sign, and the in Figure 3B graphs refer to the - sign in the last line of Equation 4. Corresponding average voltages are shown as horizontal lines.

Example 2: Square-wave shaped voltage fluctuations

If square-shaped voltage variations are used, the following expression applies for near-thermoneutral operation:

$$\Downarrow \quad T_1(\dot{\xi}_{r,1} \cdot \dot{z}_{J,1}) + \dot{z}_2(\dot{\xi}_{r,2} \cdot \dot{z}_{J,2})$$

$$\Updownarrow \quad \left( \frac{(U_1-E)}{R}K + \frac{(U_1-E)^2}{R} \right) + T_2\left( \frac{(U_2-E)}{R}K + \frac{(U_2-E)^2}{R} \right) = 0$$

$$\Updownarrow \quad U_1 + T_1\Delta U_1^2 + T_2 K\Delta U_2 + T_2\Delta U_2^2 = 0$$

$$\Updownarrow \quad U_1 + T_1\Delta U_1^2 + (1-T_1)K\Delta U_2 + (1-T_1)\Delta U_2^2 = 0$$

$$\Updownarrow \quad U_1 + T_1\Delta U_1^2 + (1-T_1)K\Delta U_2 + (1-T_1)\Delta U_2^2 = 0$$

$$\Updownarrow \quad = \frac{-K(1-T_1) \pm \sqrt{K(1-T_1)^2 - 4(1-T_1)(\Delta U_1^2 + K\Delta U_1)T_1}}{2(1-T_1)}$$

<div align="right">(Eq. 5)</div>

Herein, $\Delta U_1 = (U_1-E)$ and $\Delta U_2 = (U_2-E)$. In Equation 5, it is assumed that the voltages only switch between $U_1$ and $U_2$ such that the total period $T=T_1+T_2$.

The average voltage $U_{av}$ is given as:

$$U_{av} = T_1 \cdot U_1 + T_2 \cdot U_2 \quad (1)$$

Assuming E = 1V and $K$ = -0.3V for steam electrolysis and $K$ = -0.5 for $CO_2$ electrolysis, a first approximation for the relation between $U_1$ and $U_0$ can be obtained from Equation 4 for the sine function. Using the same assumptions for E and K, a relation from Equation 5 between $U_1$, , $U_2$ and $T_1$ for the square shaped voltage variation is obtained.

The voltage variation can be any shape. The sine-wave shape and square-wave shape are provided for mathematical simplicity. The important aspect is the integrated Joule heat balances the integrated reaction heat. Smooth curves are preferred over square-wave shaped curves to minimize stray-inductance and eddy currents in the SRU.

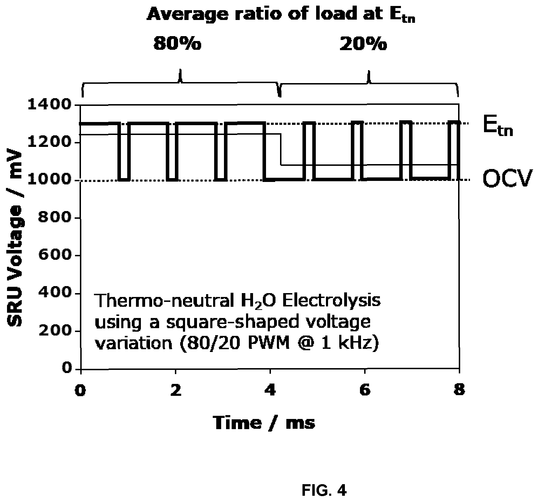

FIG. 4 shows an example with a square-shaped voltage fluctuation for steam ($H_2O$) electrolysis. Herein, the voltage fluctuates between OCV and $E_{tn}$. At these voltages, the cell is operated near-thermoneutrally.

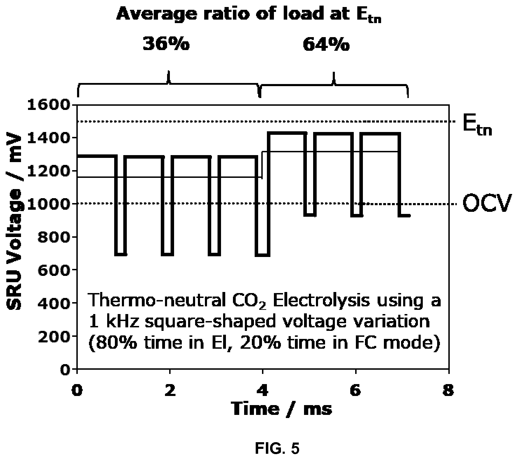

FIG. 5 6 shows an example with a square-shaped voltage fluctuation during thermoneutral $CO_2$ electrolysis. Herein, the square-wave shaped cell voltage fluctuation causes a switch between electrolysis mode and fuel cell mode when applying a cell voltage below OCV, which promotes desorption or dissolution of side reaction compounds formed in the cell electrodes. Moreover, the heat generated during the operation in fuel cell mode (i.e. the 20% of the time where the cell voltage is below OCV) balances the heat consumed during the operation in electrolysis mode (i.e. the 80% of the time where the cell voltage is above OCV). The average cell voltages are 1.18 V and 1.32 V (thin line), respectively. The two examples shown in FIG. 4 and 5 are both operated at 1 kHz.

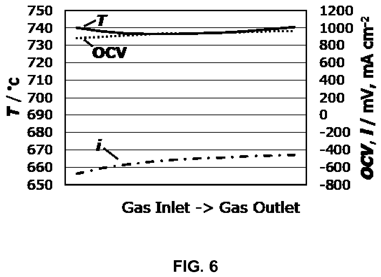

In a further experiment shown in FIG. 6, OCV/temperature/current density profiles were calculated in line with FIG. 1 (i.e. using a cell footprint of 100 $cm^2$, 5% CO at gas inlet and 27.8 % CO at gas outlet, $CO_2$ as buffer gas, 5x oxygen overblow) with the exception that voltage fluctuations according to FIG. 4 were applied (1.3 V for 74% of the fluctuation period and 0.7 V for 26% of the fluctuation period; Integral current = 53 A). FIG. 6 demonstrates that, in contrast to conventional electrolysis operation (cf. FIG. 1), a flat temperature profile is achieved inside the stack and current density changes between gas inlet and gas outlet are kept at a minimum.

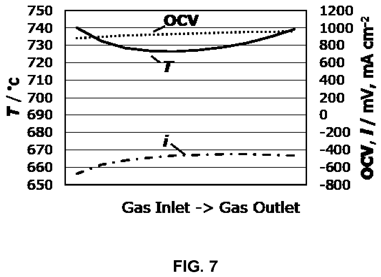

FIG. 7 shows the OCV, temperature and current density under the conditions of FIG. 6, except for the omission of oxygen overblow. In comparison to FIG. 6, a larger temperature variation is observed. However, the current density can be maintained on a similarly stable level.

It is shown that the present invention enables near-thermoneutral operation of electrolysis cells and stacks by controlling the size and shape of voltage fluctuations. By reducing thermo-mechanical stress in the stack, the lifetime of electrolysis cells and stacks may be further improved.

Accordingly, it is possible to provide a low-cost electrolysis system which simultaneously enables fast-response dynamic operation, improved electrolysis efficiency, increased lifetime and high impurity tolerance and improved conditions for CO production.

Once given the above disclosure, many other features, modifications, and improvements will become apparent to the skilled artisan.

**REFERENCE NUMERALS**

| | |
|---|---|
| 10: | electrolysis cell |
| 11: | first electrode |
| 12: | electrolyte |
| 13: | second electrode |
| 14: | reactant |
| 15: | ions |
| 15a: | second reaction product |
| 15b: | mixture of first reaction product and unreacted reactant |
| 16: | power electronic unit |
| 17: | optional PID system |
| 18: | temperature detection means |
| 10: | electrolysis cell stack |

**Claims**

1. A system for operating one or more electrolysis cell(s), comprising:

    one or more electrolysis cell(s); and
    at least one power electronic unit, wherein the power electronic unit(s) provide(s) one or more voltage fluctuations to the electrolysis cell(s), wherein the voltage fluctuation(s) are configured such that near-thermoneutral operation at part load is enabled by matching the integral Joule heat production with the integral reaction heat consumption inside said cell(s).

2. The system according to claim 1, wherein the one or more electrolysis cell(s) are configured to operate above 120°C.

3. The system according to claim 1 or 2, wherein the one or more electrolysis cell(s) are selected from solid oxide electrolysis/fuel cells (SOEC/SOFC), molten carbonate electrolysis/fuel cells (MCEC/MCFC), high temperature and pressure alkaline electrolysis/fuel cells, and ceramic electrolyte proton conducting electrolysis/fuel cells (PCEC/PCFC).

4. The system according to any of claims 1 to 3, further comprising at least one PID system controlling the voltage fluctuation(s) based on measurements of the inlet and outlet temperature of fluids sent to and from the stack.

5. The system according to any of claims 1 to 4, wherein the voltage fluctuation(s) are configured to effect desorption or dissolution of side reaction compounds adsorbed, precipitated or otherwise formed in the electrodes of the cell(s).

6. The system according to any of claims 1 to 5, wherein the duration of each voltage fluctuation(s) is in the range of from 1 $\mu$s to 1000 s.

7. The system according to any of claims 1 to 6, wherein the power electronic unit comprises a DC power supply with a pulse width modulation (PWM) motor controller, a bi-directional power supply, or a power supply in combination with an e-load.

8. The system according to any of claims 1 to 7, wherein the range of the voltage fluctuation(s) is between 0.2 V and 2.0 V.

9. The system according to claim 8, wherein the range of the voltage fluctuation(s) is between 0.5 V and 1.9 V.

10. The system according to any of claims 1 to 9, wherein the one or more electrolysis cell(s) perform electrolysis of $H_2O$ and/or $CO_2$.

11. A method for operating one or more electrolysis cell(s), comprising:

    providing one or more voltage fluctuations to the electrolysis cell(s) by at least one power electronic unit, wherein the voltage fluctuation(s) are configured such that near-thermoneutral operation at part load is enabled by matching the integral Joule heat production with the integral reaction heat consumption inside said cell(s).

12. The method according to claim 11, wherein for a fraction of the time of the voltage fluctuation, the current in the cell(s) is reversed such that the cell(s) operate in fuel cell mode.

13. The method according to any of claims 11 or 12, wherein the one or more electrolysis cell(s) perform electrolysis of at least $CO_2$.

FIG. 1

**FIG. 2A**

**FIG. 2B**

FIG. 3A

FIG. 3B

FIG. 4

FIG. 5

FIG. 6

FIG. 7

Europäisches
Patentamt

European
Patent Office

Office européen
des brevets

# EUROPEAN SEARCH REPORT

Application Number

EP 19 16 7612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTOPHER GRAVES ET AL: "Eliminating degradation in solid oxide electrochemical cells by reversible operation", NATURE MATERIALS, vol. 14, no. 2, 1 February 2015 (2015-02-01), pages 239-244, XP055453216, GB ISSN: 1476-1122, DOI: 10.1038/nmat4165 * the whole document * | 1-3,5-13 | INV. C25B1/00 C25B1/04 C25B15/02 |
| X | WO 2018/033948 A1 (TOSHIBA KK [JP]) 22 February 2018 (2018-02-22) * the whole document * | 1-4,6,7, 10,11 | |
| X | US 2009/263681 A1 (ATREYA SHAILESH [US] ET AL) 22 October 2009 (2009-10-22) * the whole document * | 1-12 | |

TECHNICAL FIELDS SEARCHED (IPC)

C25B

The present search report has been drawn up for all claims

| Place of search | Date of completion of the search | Examiner |
|---|---|---|
| Munich | 28 November 2019 | Ritter, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 16 7612

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2019

| Patent document cited in search report | | Publication date | Patent family member(s) | Publication date |
|---|---|---|---|---|
| WO 2018033948 | A1 | 22-02-2018 | JP WO2018033948 A1<br>WO 2018033948 A1 | 13-06-2019<br>22-02-2018 |
| US 2009263681 | A1 | 22-10-2009 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090325014 A1

- US 20160040310 A1

**Non-patent literature cited in the description**

- **C. GRAVES et al.** *Nature Materials,* 2015, vol. 14, 239-244